**Europäisches Patentamt**

**European Patent Office**

**Office européen des brevets**

(11) Veröffentlichungsnummer: **0 407 993 A2**

# (12) EUROPÄISCHE PATENTANMELDUNG

(21) Anmeldenummer: **90113215.9**

(22) Anmeldetag: **11.07.90**

(51) Int. Cl.5: **G02F 1/1339**

(30) Priorität: **14.07.89 DE 3923254**

(43) Veröffentlichungstag der Anmeldung:
**16.01.91 Patentblatt 91/03**

(84) Benannte Vertragsstaaten:
**AT BE CH DE ES FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Rau, Lothar**
**Mäuerlesstrasse 30**
**D-7037 Magstadt(DE)**

(54) **Flüssigkristalldisplay mit strukturierten Trägerplatten und Verfahren zur Herstellung strukturierter Trägerplatten.**

(57) Flussigkristallschalt- und Anzeigevorrichtungen haben in jüngerer Zeit zahlreiche neue Anwendungsbereiche gefunden, wie z.B. für flache Bildschirme. Für einen einwandfreien Betrieb des LC-Displays ist eine gleichmäßige Schichtdicke des flüssigkristallinen Materials von großer Bedeutung.

Um eine einheitliche Schichtdicke zu gewährleisten, werden Abstandshalter im Display eingesetzt. Im vorliegenden Flüssigkristall-Display bestehen diese Abstandshalter aus Erhebungen mindestens einer der Trägerplatten (aus Glas). Diese Erhebungen besitzen eine Höhe von 0,1 μm bis 0,1 mm und werden durch eine gezielten, schlierenfreien Ätzprozeß gewonnen. Der Ätzprozeß der Trägerplatte(n) beinhaltet als Teilschritte u.a. das Auftragen einer Ätzstartschicht (z.B. aus Titan), das Aufbringen einer Ätzstopschicht (z.B. aus Gold) sowie den eigentlichen Ätzvorgang (z.B. mit wäßriger Flußsäure).

Die erfindungsgemäßen Displays lassen sich leicht mit nematischen und smektischen LC-Materialien füllen und sind mechanisch sehr stabil.

EP 0 407 993 A2

## FLÜSSIGKRISTALLDISPLAY MIT STRUKTURIERTEN TRÄGERPLATTEN UND VERFAHREN ZUR HERSTEL-LUNG STRUKTURIERTER TRÄGERPLATTEN

Flüssigkristallschalt- und -anzeigeelemente haben in jüngerer Zeit Eingang in zahlreiche neue Anwendungsbereiche gefunden, wie z. B. für flache Fernsehbildschirme, Computerbildschirme, Drucker, Kopiergeräte usw.

Solche Flüssigkristallschalt- und Anzeigevorrichtungen, im folgenden als LC-Displays bezeichnet, enthalten bekanntlich zwei transparente Trägerplatten, die aus Glas oder Kunststoff bestehen können und mit leitfähigem und transparenten Material beschichtet sind. Diese Elektroden sind üblicherweise mit einer organischen, polymeren oder einer anorganischen Orientierungsschicht überzogen.

Zwichen den Elektroden und der Orientierungsschicht befinden sich gegebenenfalls noch weitere Schichten als Diffusionssperr-, Antireflex- oder Isolierschichten Zum Betrieb des LC-Displays ist im allgemeinen mindestens ein Polarisator - üblicherweise als auf die Trägerplatte aufgeklebte Polarisationsfolie - erforderlich. Bei Farb-LC-Displays befindet sich zwischen einer der Elektroden und der Trägerplatte eine Farbfiltermatrix.

Für einen einwandfreien Betrieb des Flüssigkristalldisplays ist ferner eine gleichmäßige und wohldefinierte Flüssigkristallschichtdicke beziehungsweise ein gleichmäßiger und wohldefinierter Elektrodenabstand erforderlich. Dieser Abstand wird durch sogenannte Abstandshalter (spacer) gewährleistet. Die Qualität und Stabilität sowie die Verteilung der Abstandshalter beeinflußt entscheidend die Güte des Flüssigkristall-Displays.

Zur Zeit werden verschiedene Techniken zur Erzielung einer konstanten Schichtdicke angewandt. Eine weit verbreitete Technik ist das Einstreuen von zylinder-förmigen Glasfaserabschnitten zwischen die beiden beschichteten Trägerplatten. Solche Glasfaserabschnitte sind bereits kommerziell erhältlich (z.B. von Nippon Electric Glass Co., Ltd., Osaka). Auch Partikel aus Metallen können als Abstandshalter Verwendung finden, was am Beispiel von Aluminiumteilchen bei K. Iwasa, J. Electron. Eng. 23 , 33 (1986) vorgestellt wird. Selbstklebende Kunststoff-Kugeln eignen sich ebenfalls als Abstandshalter.

Den genannten Verfahren ist der Nachteil gemeinsam, daß die Teilchen als Fremdkörper die Orientierung des Flüssigkristalles stören können und den optischen Kontrast des LC-Displays dadurch verringern. Dieser Nachteil wirkt sich besonders stark aus, wenn das elektrooptisch aktive Medium eine smektische Flüssigkristallphase, insbesondere eine ferroelektrische smektisch C*-Phase ist.

Weiterhin führt der statistische Einstreuprozeß oft zu einer störenden Verklumpung der Teilchen.

Ein alternatives, bereits bekanntes Verfahren ist die Verwendung photolithographisch erzeugter, strukturierter Abstandshalter aus Photoresist, Polyimid oder anderen organischen Materialien (siehe J. Dijon et al., EURODISPLAY '87, (09.1987)). Der Vorteil der gezielten Strukturierung ist, daß man die Abstandshalter an genau definierten Positionen anbringen kann, die so gewählt sind, daß sich die Abstandshalter nicht störend auf den Kontrast auswirken. Solche Positionen befinden sich bei jedem Display z.B. auf den elektro-optisch nicht aktiven Randflächen zwischen den Bildpunkten.

Die Verwendung dieser Abstandshalter kann jedoch zu Problemen hinsichtlich ihrer mechanischen und chemischen Stabilität führen. So können z.B. lösliche Restbestandteile des Photoresistmaterials das Phasenverhalten und die elektro-optischen Eigenschaften des Flüssigkristall-Mediums ungünstig beeinflussen. Ferner können sich Härte- und Haftungsprobleme ergeben. Schmale Abstandshalter neigen dazu, sich abzulösen oder zu deformieren. Abstandshalter mit größerem Querschnitt sind wegen ihrer großen Sperrfläche nachteilig, da sie zu einem deutlich höheren Zeitaufwand beim LC-Display-Füllprozeß führen.

Gegenstand der vorliegenden Erfindung sind Flüssigkristallschalt- und -anzeigevorrichtungen mit neuen, mechanisch und chemisch sehr stabilen Abstandshaltern sowie ein Verfahren zur Herstellung der Abstandshalter durch die Strukturierung von Trägerplatten.

Die erfindungsgemäße Flüssigkristallschalt- und -anzeigevorrichtung geht von einer bekannten Vorrichtung aus, die a) zwei transparente Trägerplatten aus Glas mit elektrisch leitfähigen und transparenten und gegebenenfalls weiteren Beschichtungen sowie b) zumeist mindestens einen Polarisator und c) ein flüssigkristallines Medium, das zwischen beiden Trägerplatten angeordnet ist, enthält. Prinzipiell kann das erfindungsgemäße Display auch ohne Polarisator aufgebaut sein, siehe PD-LC-Displays, wie sie von Z. Yaniv et al. in "Active matrix polymer dispersed LC-displays", (Proceedings of the 9th International Display Research Conference, 16.-18.10.1989, Kyoto, Japan) vorgestellt wurden. Der erfinderische Schritt besteht darin, daß mindestens eine der Trägerplatten gleichmäßig hohe Erhebungen aus Glas aufweist, die der anderen Trägerplatte zugewandt sind. Diese Erhebungen gewährleisten einen gleichmäßigen Abstand zwischen den Grundflächen der beiden Trägerplatten und ersetzen somit die in anderen Flüssigkristallschaltund -anzeigevorrichtungen notwendigen Abstandshalter. Die als Abstandshalter dienenden Erhebungen der Trägerplatte (bzw. der Trägerplatten) haben eine Höhe zwischen 0,1 μm und 0,1 mm.

Die Flüssigkristallschalt- und -anzeigevorrichtung kann als flüssigkristallines Medium sowohl eine ferroelektrische wie auch eine nematische Flüssigkristallphase enthalten. Bei Verwendung eines ferroelektrischen LC-Mediums besitzen die als Abstandshalter fungierenden Erhebungen der Glas-Trägerplatte vorzugsweise eine Höhe von 0,5 bis 10 μm besonders bevorzugt von 1,0 bis 2,0 μm.

Für nematische LC-Displays ist eine Höhe der Erhebungen der Trägerplatte(n) von 1,0 bis 20,0 μm, insbesondere von 3,0 bis 10,0 μm vorteilhaft.

Die erfindungsgemäßen Abstandshalter werden, wie oben beschrieben, nicht als Fremdbestandteil auf eine Trägerplatte aufgebracht, sondern eine der Trägerplatten wird in der Weise geätzt, daß die Abstandshalter säulenartig als erhabene Teilflächen stehenbleiben. Die LC-Schicht kann dann ohne großen Aufwand in das freigeätzte Volumen eingefüllt werden. Die Abstandshalter sind ein fester Bestandteil der Trägerplatte.

Vorteilhaft ist hierbei, daß nicht nur ein Zusammendrücken, sondern auch ein "Atmen" der LC-Displays, d.h. Änderung der Zellendicke durch plötzliche Druck- und Temperaturschwankungen (Schockempfindlichkeit), besser verhindert werden können, wenn die Trägerplatten durch eine Kleberschicht auf den Abstandshaltern zusammengeklebt werden.

Als Variante kann auch eine Ätzung beider Trägerplatten vorgenommen werden, so daß beide Platten als Abstandshalter fungieren. Besonders vorteilhaft ist hierbei, daß die Abstandshalter stirnflächig zusammengeklebt werden können. Damit kann man eine mögliche Beeinflussung der Orientierungsschicht beim Verkleben der Trägerplatten vermeiden.

Besonders vorteilhaft sind LC-Displays, bei denen sich die erfindungsgemäßen Glasabstandshalter überwiegend auf den elektro-optisch nicht aktiven, d.h. nicht schaltenden, Zwischenbereichen befinden (im Bereich zwischen Spalten-und Zeilenelektroden).

Die erfindungsgemäßen LC-Displays zeichnen sich durch eine hervorragende Stabilität gegenüber mechanischer Deformation aus und besitzen einen hohen Kontrast. Da die Abstandshalter Bestandteil einer Trägerfläche sind, ergeben sich keine Haftungsprobleme. Die Abstandshalter sind zudem chemisch dem Flüssigkristall gegenüber völlig inert.

Gegenstand der Erfindung ist ferner ein Verfahren zur Herstellung von strukturierten Trägerplatten für LC-Displays. Dieses Verfahren besteht im wesentlichen aus folgenden Prozeßschritten:

a. Substratreinigung

b. Aufbringen einer Ätzstartschicht

c. Aufbringen einer Ätzstopschicht

d. Strukturierung der Ätzstopschich, insbesondere durch photolithographische Verfahren

e. Aufbringen einer Schutzschicht auf der Substratrückseite

f. Ätzen der nicht mit Ätzstopschicht oder Schutzschicht bedeckten Flächen

g. Entfernen der Schutzschicht und selektiven Ätzen der verbliebenen Ätzstart- und Ätzstopschichten.

Für dieses Verfahren haben sich eine Reihe von Methoden und Materialien als besonders geeignet herausgestellt.

Geeignet ist die Verwendung von Trägerplatten aus Glas. Besonders geeignet sind Bariumoxid-arme Glassubstrate.

Ganz besonders vorteilhaft sind Alkali- und Bariumoxid-arme Gläser (wie beispielsweise das Glas D263 der Deutschen Spezialglas AG, BRD, Grünenplan).

Die Vorreinigung der Gläser erfolgt vorzugsweise mit wäßrigen Tensidlösungen und/oder organischen Lösemitteln, evtl. auch mit Dämpfen organischer Lösemittel. Besonders geeignet ist die Nachreinigung durch Sputterätzen. Um ein hohes Maß an Transparenz der Trägerplatten zu erreichen, ist es notwendig, eine Trübung des Glases oder eine Schlierenbildung zu vermeiden.

Aus diesem Grunde, eignen sich zur Herstellung von strukturierten Trägerplatten nur solche Ätzprozesse, bei denen eine Schlierenbildung unterbleibt.

Besonders geeignet erweist sich ein Ätzprozeß, bei dem eine besondere Schicht, die vor dem Kontakt mit dem Ätzmittel aufgebracht wird (sogenannte Ätzstartschicht) Verwendung findet.

Als Ätzstartschicht wird bevorzugt eine 0,5 nm - 1 μm dicke Schicht aus Titan oder Tantal verwendet, besonders bevorzugt wird eine 1 -100 nm dicke, ganz besonders bevorzugt eine 5 - 40 nm dicke Ätzstartschicht.

Zur Vermeidung der Ätzung an den Stellen der Trägerplatte, die als Erhebungen stehen bleiben sollen (als Abstandshalter) wird eine Ätzstopschicht aufgetragen.

Die Ätzstopschicht besitzt eine Dicke von 1 - 500 nm, insbesondere von 10 - 200 nm, und besteht vorzugsweise aus Edelmetall, Titanoxid oder Tantalpentoxid. Besonders geeignet sind 50 - 100 nm dicke Goldschichten. Ätzstart- und Ätzstopschicht werden vorzugsweise durch Aufdampfen oder Aufsputtern aufgebracht. Als Schutzschicht auf der Substratrückseite ist gehärteter Photolack geeignet, aber auch andere organische Polymere oder ätzmittel-resistente anorganische Schichten können Verwendung finden.

Als Ätzmittel ist eine wäßrige Flußsäurelösung besonders geeignet. Besonders geeignet ist dabei eine Konzentration der wäßrigen Flußsäurelösungen von mehr als 2 Gew.-% HF. Geeignet sind ferner wäßrige Alkalihydroxid oder andere stark alkalische Lösungen, wobei eine Konzentration der wäßrigen Alkalihydroxidlösung von mehr als 10 Mol-% Alkalihydroxid vorteilhaft ist.

Geeignet sind ferner Plasma-, reaktives Ionen- oder Ionenstrahlätzen. Als Ätzmedium beim Plasmaätzen kann beispielsweise Schwefelhexafluorid ($SF_6$) Verwendung finden. Zum selektiven Entfernen der verbliebenen Ätzstart- und Ätzstopschichten werden, sofern notwendig, wäßrige Ätzlösungen verwendet.

Geeignet zur Herstellung der erfindungsgemäßen LC-Displays sind ferner Varianten des oben angeführten Verfahrens. Geeignet ist z.B. das folgende Verfahren:

a. Aufbringen einer Ätzstopschicht

b. Strukturierung der Ätzstopschicht

c. Aufbringen der Ätzstartschicht

d. Aufbringen einer Schutzschicht auf der Substratrückseite

e. Ätzen des Substrates und der Ätzstartschicht wobei die mit Ätzstopschicht bedeckten Flächen stehen bleiben

f. Entfernen der Schutz- und Ätzstopschicht

Besonders geeignet ist diese Variante, wenn Photoresist (wie z. B. Photoresist AZ4521 der Hoechst AG) als Ätzstopschicht Verwendung findet.

Die Schichtdicke der Abstandshalter kann sehr genau von 0,1 $\mu$m - 0,1 mm insbesondere im Bereich von 1,0 bis 10 $\mu$m, durch die Ätztemperatur, Ätzzeit und Ätzmittelkonzentration eingestellt werden.

Das wichtigste gemeinsame Merkmal des erfindungsgemäßen Verfahrens und seiner Varianten ist die schlierenfreie Ätzung durch das Aufbringen einer Ätzstartschicht.

Die folgenden Beispiele dienen der Erläuterung der Erfindung.

**Beispiel 1**

Herstellung eines SSFLC-Displays (surface-stabilized-ferroelectric liquid crystal display) mit geätzten Glasabstandshaltern

Es wurde ein SSFLC-Display mit insgesamt 12 288 Bildpunkten auf einer Bildfläche von 28,8 mm x 38,4 mm realisiert. Die Bildpunktmatrix mit 300 $\mu$m x 300 $\mu$m großen Bildpunkten wird aus 96 Zeilen und 128 Spaltenleitungen in einem 300 $\mu$m Raster gebildet. Die Zeilen- und Spaltenleitungen sind 280 $\mu$m breit. Der Zwischenraum von zwei benachbarten Zeilen- oder Spaltenleitungen beträgt 20 $\mu$m. Damit ergibt sich die aktive Bildpunktfläche zu 280 $\mu$m x 280 $\mu$m. Es wurde ein Elektrodenabstand (Zellendicke) von 1,8 $\mu$m realisiert. Zum Einsatz kam eine handelsübliche Flüssigkristallmischung (®FELIX 008, eingetragenes Warenzeichen der Firma Hoechst AG, 6230 Frankfurt 80). Die Zeilen- und Spaltenleitungen bestehen aus einer 80 nm dicken ITO-Schicht (Indium-tin-oxide), die in den Kontaktbereichen außerhalb der aktiven Bildfläche mit einer Nickel (50 nm)/Gold (50 nm)-Kontaktschicht überzogen wurden. Die Zeilenleitungen wurden auf einen 0,8 mm dicken Glasträger (D 263 der Firma DESAG) im weiteren als Grundsubstrat bezeichnet, realisiert. Die Spaltenleitungen und die Abstandshalter wurden auf einen 0,5 mm dicken, sortengleichen Glasträger, im weiteren als Decksubstrat bezeichnet, aufgebracht. Die Abstandshalter mit einer Grundfläche von 20 $\mu$m x 20 $\mu$m wurden in einem quadratischen Raster von 600 $\mu$m Kantenlänge aus dem Decksubstrat geätzt. Es ergibt sich damit eine Verteilung von ca. 2,78 Abstandshaltern pro mm$^2$. Die Abstandshalter wurden dann, bei der Spalten- und Zeilenherstellung, exakt auf den Kreuzungspunkten angeordnet, die aus den Zwischenräumen von Zeilen- und Spaltenleitungen gebildet werden. Sämtliche Abstandshalter befinden sich also im ungesteuerten Bereich der Anzeige.

Die Prozeßfolge zur Herstellung der SSFLC-Anzeige mit 12288 Bildpunkten wird nachfolgend kurz beschrieben. Sofern in den einzelnen Herstellungsschritten keine spezielle Zuordnung getroffen wird, gilt die Prozeßfolge sowohl für das Grundsubstrat (Glasträger D 263, 5 cm x 5 cm, 0,8 mm dick) als auch für das Decksubstrat (Glasträger D 263, 5 cm x 5 cm, 0,5 mm dick).

1. Reinigung der Glassubstrate (Trägerplatten)

- Ultraschallreinigung in einer 1 %igen wäßrigen Tensidlösung (Mucasol, Firma Merz + Co., D-6000 Frankfurt/Main 1) Reinigungsdauer 10 Minuten.

- Spülen der Substrate unter fließendem Wasser mit anschließender Ultraschallreinigung in Wasser (Dauer der Ultraschallbehandlung 2 x 5 Minuten).
- Trockenschleudern in einer Zentrifuge bei 1000 U/min (Dauer der Substrattrocknung 1 Minute).
- Ultraschallreinigung in Isopropanol bei 50 °C (Reinigungsdauer 10 Minuten).
- Trocknen der Substrate im Isopropanoldampfbad (Dauer der Dampftrocknung 10 Minuten).

2. Entspannung der Gläser
- Nach der Substratreinigung werden die Gläser durch einen Temperprozeß in einem Umluftofen (450 °C/12 h) entspannt.
- Die Substratreinigung wird sowohl nach dem Temperprozeß als auch nach jedem photolithographischen Strukturierungsschritt im Verlauf der Displayherstellung wiederholt.

3. Nachreinigung der Glassubstrate
- Unmittelbar vor jeder Schichtabscheidung erfolgt eine zusätzliche Substratreinigung durch einen insitu-Sputterätzprozeß. Die Prozeßparameter sind dabei: ein Argonpartialdruck von $1 \times 10^{-3}$ mbar und eine Hf-Leistung (13,56 MHz) von 0,2 $W/cm^2$ bei unbeschichteten Substraten, oder 0,1 $W/cm^2$ bei bereits beschichteten Substraten (Ätzdauer 2 Minuten).

4. Verfahren zur Herstellung der Abstandshalter (nur für die Decksubstrate)
4.1 Aufdampfen einer Ti/Au-Schicht in einem Vakuumschritt. 15 Schichtdicke für Titan 20 nm, bevorzugt 10 nm; Schichdicke für Gold 100 nm.
4.2 Photolithografische Strukturierung der Au-Schicht. Nur noch die Bereiche der Abstandshalter bleiben mit Gold bedeckt. (Spacermaske) Ätzmittel: 4 Teile KJ, 1 Teil $J_2$, 20 Teile $H_2O$. Photolack: "AZ 1514" der Firma Hoechst AG, Frankfurt.
4.3 Auflaminieren des Schutzlackes ("R 225", Firma Hoechst AG) auf der Substratrückseite.
4.4 Ätzen des Glassubstrates.
Ätzmittel: 1 Teil HF (48 %),
1 Teil $H_2O$
Ätztiefe: 1,8 $\mu$m
Ätzdauer: 30 sec
4.5 Photolack strippen in Aceton
4.6 Entfernen der Au-Schicht auf den Abstandshaltern (entsprechend 4.2)
4.7 Substratreinigung

5. Sputtern einer 80 nm dicken ITO-Schicht aus einem ITO-Target
Prozeßparameter:
Argonpartialdruck: $1 \times 10^{-2}$ mbar;
Hf-Leistung: 0,8 $W/cm^2$
6. Tempern der ITO-Schicht: Umluftofen bei 350 °C für 2 h.
7. Photolithografische Strukturierung der ITO-Schicht. Die Zeilen (Grundsubstrat) bzw. die Spaltenleitungen (Decksubstrat) werden ausgebildet. Photolack "AZ 1514" der Firma Hoechst AG. Ätzmittel: HJ (57 %), 3 Vol.-% $H_3PO_2$ bei einer Ätztemperatur von 50 °C.
8. Photolack strippen in Aceton.
9. Photolithografie für die "Lift-off"-Strukturierung der Kontaktschicht (s. Punkt 11). Photolack "AZ 4521" der Firma Hoechst AG
10. Aufdampfen der Kontaktschicht aus 50 nm Nickel und 50 nm Gold in einem Vakuumschritt. Die Ni/Au-Schicht wird in die Photolackstruktur aufgedampft.
11. Strukturierung der Ni/Au-Schicht durch Strippen des Photolacks in Aceton ("lift-off"-Prozeß).
12. Substratreinigung
13. Aufschleudern einer 20 nm dicken Polyimidschicht. Polyimid: "OPTMER AL 1051" der Firma Japan Synthetic Rubber Co., LTD.
14. Photolithografische Strukturierung der Polyimidschicht. Photolack "AZ 1514" der Firma Hoechst AG; Entwickler "MIF 524" der Firma Hoechst AG
15. Photolack strippen in Aceton.
16. Härten der Polyimdischicht im Umluftofen bei 180 °C für 1h.
17. Orientierung der Polyimidschicht durch Reiben mit einer Kohlefaserbürste.
18. Aufbringen eines Kleberahmens in Siebdrucktechnik auf das Grundsubstrat. Kleber: "XN-5AC-F" der Fa. MITSUI TOATSU CHEMICALS, INC.
19. Verkleben von Grund- und Decksubstrat unter Druck (1,5 Kp/$cm^2$) bei 150 °C für 90 min (Zellenbau).
20. Einfüllen der handelsüblichen Flüssigkristallmischung ®Felix 008 (Firma Hoechst AG) bei 90 °C. Verschließen der Einfüllöffnung.

**Beispiel 2**

Herstellung von strukturierten Trägerplatten (zusätzliche Variante)

1. Glassubstrate aus dem alkaliarmen Borosilikatglas (D 263 der Firma DESAG) wurden zunächst einer ersten Substratreinigung dann einer Temperaturbehandlung zur Entspannung der Gläser und daraufhin einer zweiten Substratreinigung unterzogen (siehe Beispiel 1).

2. Die so vorbereiteten Glassubstrate wurden nach einem insitu-Sputterätzprozeß (Argonpartialdruck $10^{-3}$ mbar, Hf-Leistung 0,2 W/cm$^2$ bei 13,56 MHz) in einem Vakuumschritt mit einer 20 nm dicken Tantal- oder 20 bis 40 nm dicken Titan-Ätzstartschicht und einer 300 bis 500 nm dicken Maskierungsschicht aus Aluminium bedampft.

3. Die Maskierungsschicht wurde nach einem Photolithographieschritt ("AZ 5214" der Firma Hoechst AG) naßchemisch strukturiert. Dabei wurden die späteren Spacerbereiche, Quadrate mit 20 $\mu$m Kanten-länge, freigeätzt (inverse Spacermaske). Der Spacerabstand betrug in einem quadratischen Raster jeweils 600 $\mu$m. Als Ätzmittel wurde eine Lösung aus 1 Teil HNO$_3$, 16 Teilen H$_3$PO$_4$ und 3 Teilen H$_2$O bei einer Ätztemperatur von 40° C eingesetzt.

4. Durch eine thermische Oxidation der Substrate in einem Umluftofen (350 bis 450° C/12 h) erfolgte partiell eine Umwandlung der Ätzstartschicht aus Tantal oder Titan in eine Ätzstopschicht aus Tantal-pentoxid (Ta$_2$O$_5$) oder Titanoxid (TiO$_2$)

5. Zum Schutz der Substratrückseite wurde ein 20 $\mu$m dicker Schutzlack auflaminiert ("R225" der Firma Hoechst AG).

6. Die ebenfalls teilweise oxidierte Maskierungsschicht aus Aluminium wurde naßchemisch entfernt (s. 3. Herstellungsschritt).

7. In einer wäßrigen, gepufferten Flußsäurelösung (1 Teil HF-48 %ig, 1 Teil HNO$_3$-konz., 1 Teil H$_2$O) wurden dann die Ätzstartschicht (Tantal oder Titan) und die dabei freigelegte Glasoberfläche 1,7 $\mu$m tief geätzt. Für die laterale Unterätzung der o.g. Spacergeometrien wurde ein Wert von 2 $\mu$m gemessen.

**Beispiel 3**

Herstellung eines TN-Displays (Twisted nematic display) im 1. Minimum mit geätzten Glasabstandshaltern

Es wurde ein TN-Testdisplay mit insgesamt 5 großflächigen Bildpunkten auf einer Bildfläche von 36,8 mm x 27,2 mm realisiert. Auf einem 0,8 mm dicken Glasträger ("D263" der Firma DESAG), dem sogenannten Grundsubstrat, wurden fünf unterschiedlich große ITO-Elektroden angeordnet. Ein 0,5 mm dicker Glasträger, das sogenannte Decksubstrat, mit geätzten Abstandshaltern und mit einer geschlossenen ITO-Fläche bildet die gemeinsame Gegenelektrode der Bildpunkte. Die Kontaktierung der Elektroden erfolgt ausschließlich auf Kontaktflächen des Grundsubstrates. In den Kontaktbereichen wurden die ITO-Elektroden mit einer Ni/Au-Schicht überzogen (Schichtdicken Au-50 nm; Ni-50 nm).

Der Anschluß der Gegenelektrode auf die vorgesehenen Kontakte des Grundsubstrates erfolgten mittels Leitkleber. Die Anordnung und die lateralen Abmessungen der Abstandshalter entsprechen dem Beispiel 1. Mit den geätzten Abstandshaltern wurde für das TN-Display ein Elektrodenabstand von 4,5 $\mu$m realisiert. Eingesetzt wurde eine handelsübliche Flüssigkristall-Mischung ("ZLI 4180" der Firma Merck, Darmstadt).

Die Prozeßfolge zur Herstellung der TN-Anzeige unterscheidet sich gegenüber Beispiel 1 nur in den folgenden Prozeßschritten:

Prozeßänderungen gegenüber Beispiel 1:

4.4 Ätzen des Decksubstrates. Ätzmittel: 2 Teile HF (48 %), 1 Teil H$_2$O. Ätztiefe: 4,5 $\mu$m Ätzdauer: 35 sec.

7. Aufgrund der großflächigen Elektroden befinden sich die Abstandshalter auch im aktiven Bildbereich der Anzeige. Um Kurzschlüssen zwischen Grund- und Gegenelektrode vorzubeugen, war es erforderlich, zusätzlich zur Strukturierung der ITO-Gegenelektrode auf dem Decksubstrat auch die Spacerbereiche freizuätzen.

11., 12. Die Ni/Au-Kontaktschicht wird nur auf das Grundsubstrat aufgebracht und strukturiert.

18. Zusätzlich wird auf die ITO-Kontaktflächen des Deckensubstrates ein Leitkleber aufgetragen (z.B.

Leitkleber "EPO-TEK H31D" der Firma Polytec, D-7517 Waldbronn).
20. Einfüllen einer handelsüblichen Flüssigkristallmischung ("ZLI 4180" der Firma E. Merck, Darmstadt).

**Beispiel 4**

Ätzrate und Ätztiefe

Zur Untersuchung der Ätzrate und Ätztiefe sowie deren Abhängigkeit von den Prozeßparametern wurden Glassubstrate aus einem alkaliarmen Borosilikatglas ("D263" der Firma Deutsche Spezialglas AG, Grünenplan, BRD) mit einer 20 nm dicken Titanschicht und einer 100 nm dicken Goldschicht bedampft. Die Goldschicht wurde photolithographisch strukturiert, so daß in einem quadratischen Muster von 600 μm Kantenlänge jeweils quadratische Flächen der Kantenlänge 20 μm mit Gold und Photolack bedeckt blieben.

Das so präparierte Substrat wurde in ein Flußsäureätzbad gestellt. Die Abhängigkeit der Säulenhöhe, Ätzrate, Unterätzung und Oberflächenrauhigkeit von der Ätzzeit und der Konzentration des Ätzmittels wurde untersucht.

Die Ergebnisse sind in Tabelle I zusammengefaßt.

Tabelle 1

| Substrat | 1 | 2 | 3 | 4 | 5 |
|---|---|---|---|---|---|
| Konzentration der 48 % HF | 1:20 | 1:10 | 1:5 | 1:1 | konz. |
| Ätzzeit in Sek. | 360 | 150 | 180 | 30 | 9 |
| Säulenhöhe in μm | 0,6 | 0,6 | 2,1 | 2 | 2 |
| Unterätzung in μm | 4 | 2,5 | 9 | 5 | 4,5 |
| Unterätzung auf 2 μm bezogen in μm | 13,3 | 8,3 | 8,5 | 5 | 4,5 |
| Ätzrate in nm/s | 1,7 | 4 | 11,7 | 66,7 | 222 |
| Oberflächenrauhigkeit | <20 nm | <20 nm | <20 nm | <20 nm | <20 nm |

**Ansprüche**

1. Flüssigkristallschalt- und -anzeigevorrichtung, enthaltend a) zwei transparenten Trägerplatten aus Glas, mit elektrisch leitfähigen und transparenten und gegebenenfalls weiteren Beschichtungen, sowie b) mindestens einen Polarisator und c) ein flüssigkristallines Medium, angeordnet zwischen beiden Trägerplatten, dadurch gekennzeichnet, daß mindestens eine der Trägerplatten Erhebungen aus Glas gleichmäßiger Höhe aufweist.

2. Flüssigkristallschalt- und -anzeigevorrichtung gemäß Anspruch 1, dadurch gekennzeichnet, daß die als Abstandshalter dienenden Erhebungen eine Höhe zwischen 0,1 μm bis 0,1 mm aufweisen.

3. Flüssigkristallschalt- und -anzeigevorrichtung gemäß Anspruch 1, dadurch gekennzeichnet, daß als flüssige kristallines Medium eine ferroelektrische Flüssigkristallphase verwendet wird und die als Abstandshalter dienenden Erhebungen eine Höhe zwischen 1,0 und 2,0 μm aufweisen.

4. Flüssigkristallschalt- und -anzeigevorrichtung gemäß Anspruch 1, dadurch gekennzeichnet, daß als LC-Medium eine nematische Flüssigkristallphase verwendet wird und die als Abstandshalter dienenden Erhebungen eine Höhe von 3 bis 10 μm aufweisen.

5. Flüssigkristallschalt- und -anzeigevorrichtung gemäß Anspruch 3, dadurch gekennzeichnet, daß sich die als Abstandshalter dienenden Erhebungen der Trägerplatte im elektrooptisch inaktiven, d.h. nicht schaltenden Bereich zwischen den Bildpunkten der Vorrichtung befinden.

6. Verfahren zur Herstellung von Trägerplatten für ein Flüssigkristallschalt- und -anzeigevorrichtung gemäß Anspruch 1, dadurch gekennzeichnet, daß die als Abstandshalter dienenden Erhebungen der Trägerplatten durch einen schlierenfreien Ätzprozeß der Trägerplatte hergestellt werden.

7. Verfahren zur Herstellung von Trägerplatten für ein Flüssigkristallschalt- und -anzeigevorrichtung gemäß Anspruch 6, dadurch gekennzeichnet, daß der schlierenfreie Ätzprozeß das Auftragen einer Ätzstartschicht beinhaltet.

8. Verfahren zur Herstellung von Trägerplatten für ein Flüssigkristallschalt- und -anzeigevorrichtung gemäß Anspruch 6, dadurch gekennzeichnet, daß auf mindestens eine der Trägerplatten eine Ätzstartschicht aus Titan oder Tantal aufgebracht wird und als Ätzmittel eine wäßrige Flußsäure-Lösung oder eine alkalische Lösung verwendet wird.

9. Verfahren zur Herstellung von Trägerplatten für ein Flüssigkristallschalt- und -anzeigevorrichtung gemäß Anspruch 6, dadurch gekennzeichnet, daß eine Ätzstartschicht aus Titan oder Tantal aufgebracht wird und Ionenstrahlätzen oder ein Plasmaätzprozeß angewandt wird.

10. Verfahren zur Herstellung von Trägerplatten für ein Flüssigkristallschalt- und -anzeigevorrichtung gemäß Anspruch 6, dadurch gekennzeichnet, daß auf mindestens eine der aus Bariumoxid-armen Glas bestehenden Trägerplatten eine Ätzstartschicht aus Titan oder Tantal mit einer Dicke von 0,5 nm bis 1 μm aufgebracht wird und eine Ätzstopschicht aus Edelmetall, Titanoxid oder Tantalpentoxid mit einer Dicke von 1 bis 500 nm Verwendung findet.

11. Verfahren nach Anspruch 10, dadurch gekennzeichnet, daß die Ätzstartschicht eine Dicke von 5 bis 40 nm und die Ätzstopschicht eine Dicke von 10 bis 200 nm aufweist.

12. Verwendung von strukturierten Trägerplatten gemäß einem der Ansprüche 6 bis 11 als Trägerplatte mit Abstandshalter in Flüssigkeitstallschalt- und -anzeigevorrichtungen.